# EUROPÄISCHE PATENTANMELDUNG

(11) **EP 4 635 282 A1**
(43) Veröffentlichungstag der Anmeldung: **22.10.2025**
(21) Anmeldenummer: 25161629.8
(22) Anmeldetag: 04.03.2025
(51) Int. Cl.: A01B 73/02, A01B 73/06, A01M 7/00

(54) **VERTEILVORRICHTUNG UND LANDWIRTSCHAFTLICHE ARBEITSMASCHINE**

(30) Priorität: 19.04.2024 DE 102024110975
(71) Anmelder: Amazonen-Werke H. Dreyer SE & Co. KG, 49205 Hasbergen (DE)
(72) Erfinder: Kowollik, Daniel, 49205 Hasbergen-Gaste (DE)
(74) Vertreter: Heisel, Per-Christian

(57) **Zusammenfassung**

Die Erfindung betrifft eine Verteilvorrichtung (2) zur Verteilung eines landwirtschaftlichen Verteilguts mit einem Verteilgestänge (3), welches von einer eingeklappten Transportstellung in eine ausgeklappte Arbeitsstellung überführbar ist, wobei Mittel (4) zur Versteifung des Verteilgestänges (3) in dessen Arbeitsstellung vorgesehen sind. Ferner betrifft die Erfindung eine Arbeitsmaschine (1) mit einer solchen Verteilvorrichtung (2).

## Beschreibung

Die Erfindung betrifft eine Verteilvorrichtung zur Verteilung eines landwirtschaftlichen Verteilguts mit einem Verteilgestänge, welches von einer eingeklappten Transportstellung in eine ausgeklappte Arbeitsstellung überführbar ist. Ein weiterer Gegenstand der Erfindung ist eine landwirtschaftliche Arbeitsmaschine mit einer Verteilvorrichtung.

Verteilvorrichtungen kommen oftmals als Komponenten von landwirtschaftlichen Arbeitsmaschinen zum Verteilen oder Ausbringen von Verteilgut auf landwirtschaftlichen Nutzflächen zum Einsatz. Entsprechende Arbeitsmaschinen werden in der Regel mit einer gewissen Fahrgeschwindigkeit entlang im Wesentlichen parallel zueinander verlaufenden Bahnen in Fahrtrichtung über die entsprechende landwirtschaftliche Nutzfläche bewegt, wozu diese entweder selbstfahrend ausgebildet sein können oder alternativ an eine landwirtschaftliche Zugmaschine angebaut oder angehängt sein können.

Das in der Regel fluidförmige oder granulare Verteilgut - beispielsweise Saatgut, Dünger, Spritz- oder Pflanzenschutzmittel - ist oftmals in einem Vorratsbehälter der Arbeitsmaschine bevorratet und wird während des Verteilens aus dem Vorratsbehälter zu der Verteilvorrichtung zugeleitet und/oder gefördert. Über die Verteilvorrichtung kann das Verteilgut auf die landwirtschaftliche Nutzfläche ausgebracht werden. Die Verteilvorrichtung weist hierfür oftmals geeignete Ausbring- oder Verteilorgane, insbesondere Prallelemente, Düsen oder andere Sprühvorrichtungen, auf.

Für ein effizientes Ausbringen des Verteilguts auf der Nutzfläche sind die Verteilorgane in der Regel an einem Verteilgestänge angeordnet, welches sich in einer ausgeklappten Arbeitsstellung quer zur Fahrtrichtung beidseitig der Arbeitsmaschine über der Nutzfläche erstreckt. Zur Erhöhung der Flächenleistung und zur Minimierung der Anzahl der erforderlichen Überfahrten über die Nutzfläche weist das Verteilgestänge in der ausgeklappten Arbeitsstellung eine gewisse Spannweite auf, welche die Breite der Arbeitsmaschine üblicherweise um ein Vielfaches überschreitet.

Zu Transportzwecken, insbesondere bei Fahrten über öffentliche Straßen, muss die Spannweite des Verteilgestänges in aller Regel deutlich reduziert werden, um zulässige Höchstbreiten der Arbeitsmaschine nicht zu überschreiten. Aus diesem Grund sind solche Verteilgestänge oftmals zwischen der ausgeklappten Arbeitsstellung und einer platzsparenden, eingeklappten Transportstellung klappbar ausgebildet.

Im Sinne einer Effizienzsteigerung besteht in der Landwirtschaft ein Trend hin zu immer größeren Spannweiten des Verteilgestänges, was steigende Anforderungen an dessen mechanische Belastbarkeit mit sich bringt. Denn in der Regel geht eine größere Spannweite mit erhöhten mechanischen Lasten einher, welche insbesondere auf die der Arbeitsmaschine abgewandten Enden des Verteilgestänges wirken. Außerdem können mit steigenden Spannweiten insbesondere bei unebenen Nutzflächen verstärkt Schwingungen des Verteilgestänges auftreten, welche das gleichmäßige Ausbringen des Verteilguts erschweren.

Zur Vermeidung von unerwünschten Deformationen des Verteilgestänges und zur Reduzierung von Schwingungen des Verteilgestänges sind im Stand der Technik verschiedene Maßnahmen bekannt.

In der EP 3 278 663 B1 wird beispielsweise ein Verteilgestänge beschrieben, welches keinen einfachen I-förmigen, sondern einen im Wesentlichen L-förmigen Querschnitt aufweist. Ein in der ausgeklappten Arbeitsstellung in Fahrtrichtung ausgerichteter zusätzlicher Schenkel erhöht die Steifigkeit und somit die mechanische Stabilität des Verteilgestänges.

Aus der EP 3 753 406 B1 ist bekannt, an dem Verteilgestänge ein zusätzliches Versteifungselement anzuordnen, welches einen gebogenen, schalenförmigen Aufbau hat.

Solche Zusatzelemente zur Erhöhung der Steifigkeit des Verteilgestänges haben sich in der landwirtschaftlichen Praxis bewährt. Allerdings geht mit solchen Zusatzelementen oftmals der Nachteil einher, dass diese eine gewissen zusätzlichen Platzbedarf aufweisen, welcher sich nicht nur in der ausgeklappten Arbeitsstellung, sondern auch in der eingeklappten Transportstellung des Verteilgestänges bemerkbar machen kann. In ungünstigen Fällen können dabei zulässige Transportbreiten überschritten werden.

Vor diesem Hintergrund stellt sich die Erfindung die Aufgabe, ein Verteilgestänge anzugeben, welches einerseits eine kompakte Transportstellung erlaubt und andererseits eine zuverlässige Aufnahme der in der Arbeitsstellung auftretenden mechanischen Lasten ermöglicht.

Diese Aufgabe wird bei einem Verteilgestänge der eingangs genannten Art durch die Merkmale des Patentanspruchs 1 gelöst. Vorteilhafte Weiterbildungen sind in den abhängigen Unteransprüchen angegeben.

Es sind Mittel zur Versteifung des Verteilgestänges in dessen ausgeklappter Arbeitsstellung vorgesehen. Diese Versteifungsmittel können die mechanische Stabilität des Verteilgestänges während des Ausbringens des Verteilguts erhöhen. Zugleich kann eine kompakte, platzsparende Transportstellung sichergestellt werden. Bevorzugterweise erlauben die Versteifungsmittel insbesondere eine Verbesserung der Biege- und/oder Torsionssteifigkeit des Verteilgestänges.

In diesem Zusammenhang hat es sich als vorteilhaft erwiesen, wenn die Versteifungsmittel von einer Transportstellung in eine Versteifungsstellung überführbar sind. Die Transportstellung kann sich dabei insbesondere als platzsparend und insbesondere für eine Straßenfahrt vorteilhaft kompakt erweisen. Die Versteifungsstellung kann eine Erhöhung der mechanischen Belastbarkeit des Verteilgestänges, insbesondere eine Erhöhung der Steifigkeit des Verteilgestänges, ermöglichen. Ferner können Schwingungen des Verteilgestänges aufgrund der in deren Versteifungsstellung befindlichen Versteifungsmittel reduziert werden. Vorteilhafterweise sind die Versteifungsmittel in einer Arbeitsstellung des Verteilgestänges in die Versteifungsstellung überführbar. In analoger Weise können die Versteifungsmittel aus der Versteifungsstellung in die Transportstellung überführbar sein, um eine weniger raumgreifende Anordnung des Verteilgestänges in dessen eingeklappter Transportstellung zu ermöglichen.

Es wird ferner vorgeschlagen, dass die Versteifungsmittel über mindestens einen Aktor, insbesondere einen pneumatischen oder hydraulischen Aktor, von der Transportstellung in die Versteifungsstellung überführbar sind. Hierdurch lässt sich in fernbetätigter Weise eine bedienerfreundliche, zeitsparende Überführung der Versteifungsmittel von der Transportstellung in die Versteifungsstellung erreichen. Analog können die Versteifungsmittel über den mindestens einen Aktor auf bedienerfreundliche und zeitsparende Art und Weise von der Versteifungsstellung in die Transportstellung überführbar sein. Ferner kann auch mindestens ein Aktor vorgesehen sein, welcher eine aktive Reduzierung von Schwingungen des Verteilgestänges erlaubt, wobei der mindestens eine Aktor bevorzugt dazu eingerichtet ist, das Versteifungsmittel dynamisch und/oder mit einer definierten Frequenz anzuregen. Hierdurch kann eine Schwingungsregelung ermöglicht werden.

In diesem Zusammenhang hat es sich als konstruktiv vorteilhaft herausgestellt, wenn die Versteifungsmittel selbst längenveränderlich, insbesondere teleskopierbar, ausgebildet sind. Die längenveränderlichen Versteifungsmittel können insbesondere zwischen einer Versteifungsstellung und einer Transportstellung verstellbar sein. Alternativ oder zusätzlich können die Versteifungsmittel entlang des Verteilgestänges verschiebbar ausgebildet sein.

Des Weiteren kann es von Vorteil sein, wenn die Versteifungsmittel in eine oder mehrere Zwischenstellungen zwischen der Transportstellung und der Versteifungsstellung überführbar sind. Die Zwischenstellungen können sich durch unterschiedliche Versteifungsgrade des Verteilgestänges auszeichnen.

Ferner können die Zwischenstellungen auch als unterschiedliche Transportstellungen mit unterschiedlichem Platzbedarf ausgebildet sein.

Es wird darüber hinaus vorgeschlagen, dass der mindestens eine Aktor ein Versteifungsmittel bildet. Hierdurch kann auf konstruktiv vorteilhafte Weise ein gewichtsparender Aufbau mit einer geringen Anzahl an Bauteilen erreicht werden. Durch Betätigen des Aktors kann insbesondere über dessen Längenänderung entweder die Versteifungsstellung, eine oder mehrere Zwischenstellungen, oder die Transportstellung einstellbar sein.

In diesem Zusammenhang kann es ferner von Vorteil sein, wenn der mindestens eine Aktor mit einer Steuerung des Verteilgestänges und/oder einer Steuerung der Arbeitsmaschine und/oder einer Steuerung der landwirtschaftlichen Zugmaschine koppelbar ist. Hierdurch lässt sich der mindestens eine Aktor zuverlässig und auf bedienerfreundliche Art und Weise ansteuern.

Es ist in diesem Zusammenhang überdies bevorzugt, wenn der mindestens eine pneumatische oder hydraulische Aktor in das Pneumatik- oder Hydrauliksystem des Verteilgestänges und/oder das Pneumatik- oder Hydrauliksystems der Arbeitsmaschine und/oder das Pneumatik- oder Hydrauliksystem der landwirtschaftlichen Zugmaschine integriert oder damit gekoppelt ist. Hierdurch lässt sich der mindestens eine pneumatische oder hydraulische Aktor zuverlässig mit einem Pneumatik- oder Hydraulikmedium versorgen.

In einer vorteilhaften Weiterbildung der Erfindung wird vorgeschlagen, dass die Versteifungsmittel durch Klappen von der Transportstellung in die Versteifungsstellung überführbar sind. Es ergibt sich ein kinematisch einfacher, gleichsam störungs- wie wartungsarmer Aufbau. Die Versteifungsmittel können bei einem derartigen Aufbau auch durch ungeübtes Bedienpersonal auf zuverlässige Weise von der Transportstellung in die Versteifungsstellung und zurück überführt werden. Auch eventuelle Zwischenstellungen können einfach und sicher eingestellt werden. Alternativ zu einem Klappvorgang können die Versteifungsmittel auch durch eine andere geeignete Bewegung, etwa einem Drehen oder Schwenken, von der Transportstellung in die Versteifungsstellung überführbar sein.

In einer konstruktiv vorteilhaften Ausgestaltung sind die Versteifungsmittel durch Klappen um eine oder mehrere Verstellachsen von der Transportstellung in die Versteifungsstellung überführbar. Bei den Verstellachsen handelt es sich um diejenigen Achsen, um welche die Klappbewegungen der Versteifungsmittel durchgeführt werden kann.

Eine bevorzugte Ausführungsform sieht in diesem Zusammenhang vor, dass sich die Verstellachsen der Versteifungsmittel in im Wesentlichen horizontaler Richtung erstrecken. Es ergibt sich eine besonders einfach und zuverlässig durchführbare Klappbeweglichkeit der Versteifungsmittel. Alternativ können sich die Verstellachsen auch in einer anderen Raumrichtung, insbesondere in vertikaler Richtung, erstrecken. Zudem kann es bei gewissen konstruktiven Aufbauten des Verteilgestänges, insbesondere solchen mit einer Vielzahl von Versteifungsmitteln, vorteilhaft sein, wenn sich die jeweiligen Verstellachsen der Versteifungsmittel in unterschiedliche Raumrichtungen erstrecken.

Aus konstruktiver Sicht kann es ferner bevorzugt sein, wenn die Verstellachsen im Bereich eines Obergurts und/oder eines Untergurts des Verteilgestänges angeordnet sind. Hierdurch kann eine kompakte, platzsparende Anordnung in der Transportstellung unterstützt werden. Zudem können die Verstellachsen auf diese Weise für Wartungszwecke leicht zugänglich angeordnet sein.

In weiterer vorteilhafter Ausgestaltung wird vorgeschlagen, dass das Verteilgestänge mehrere um Klappachsen gegeneinander verklappbare Gestängeelemente bzw. Gestängesegmente oder Gestängeabschnitte aufweist. Ein derartiges Verteilgestänge lässt sich auf bedienerfreundliche und ausfallsichere Art und Weise in der eingeklappten Transportstellung platzsparend verstauen. Zugleich lässt sich ein derartiges Verteilgestänge auf einfache und robuste Art und Weise in die ausgeklappte Arbeitsstellung überführen.

In diesem Zusammenhang ist es ferner bevorzugt, wenn die Gestängeelemente über Gelenke miteinander verbunden sind. Über Gelenke lässt sich auf einfache und kinematisch vorteilhafte Weise eine gewünschte Bewegungsfreiheit der Gestängeelemente erreichen, insbesondere um diese gegeneinander verklappen zu können.

Darüber hinaus wird vorgeschlagen, dass die Versteifungsmittel mehrere ein Versteifungsgestänge bildende Versteifungselemente aufweisen. Über ein Versteifungsgestänge lässt sich eine zuverlässige Versteifung des Verteilgestänges in der Arbeitsstellung erreichen. Ferner erlaubt ein Versteifungsgestänge einen gewichts- und/oder platzsparenden Aufbau der Versteifungsmittel. Mit einem derartigen Versteifungsgestänge ist darüber hinaus eine Anpassung bzw. Erhöhung der Steifigkeit längs über definierte Abschnitte des Verteilgestänges, insbesondere über ein oder mehrere Gestängesegmente hinweg, ermöglicht. Mit anderen Worten wird die Steifigkeit des Verteilgestänges nicht nur rein punktuell, sondern bevorzugt gleichmäßig quasi entlang eines ganzen oder mehrerer ganzer Gestängeabschnitte bzw. Gestängesegmente des Verteilgestänges erhöht. Eine weitere konstruktiv vorteilhafte Ausgestaltung sieht vor, dass die Versteifungsmittel im Bereich der Verstellachsen mit den Gestängeelementen verbunden sind. Es ergibt sich ein kinematisch bevorzugter Aufbau, insbesondere im Hinblick auf eine kompakte Transportstellung von Versteifungsmitteln und/oder Verteilgestänge.

Eine bevorzugte Ausführungsform sieht vor, dass ein Teil der Versteifungselemente auf der einen Seite und ein anderer Teil der Versteifungselemente auf der gegenüberliegenden Seite des Verteilgestänges angeordnet sind. Ein solcher Aufbau kann eine besonders effektive Versteifung des Verteilgestänges in dessen Arbeitsstellung ermöglichen. Ferner kann durch einen derartigen Aufbau eine platzsparende Anordnung des Verteilgestänges in der Transportstellung unterstützt werden. Besonders bevorzugt ist es in diesem Zusammenhang, wenn die Anordnung der Versteifungselemente auf der einen Seite oder der gegenüberliegenden Seite auf die erwarteten Lasten in der ausgeklappten Arbeitsstellung des Verteilgestänges angepasst ist und/oder im Hinblick auf eine möglichst kompakte eingeklappte Transportstellung des Verteilgestänges ausgewählt ist.

Es ist des Weiteren von Vorteil, wenn die Versteifungsmittel mehrere einen Versteifungskörper aufspannende Versteifungselemente aufweisen. Über einen solchen Versteifungskörper kann eine besonders zuverlässige Versteifung des Verteilgestänges in dessen ausgeklappter Arbeitsstellung erreicht werden. Über die Gestalt des Versteifungskörpers kann zudem das Ausmaß oder der Grad der Versteifung des Verteilgestänges eingestellt werden.

Im Hinblick auf eine in der ausgeklappten Arbeitsstellung besonders steife Verteilvorrichtung hat es sich als vorteilhaft erweisen, wenn die Versteifungselemente eine mindestens ein Gestängeelement aufspreizende Spreizvorrichtung bilden. Bei einer solchen Verteilvorrichtung kann das aufgespreizte Gestängeelement zu einer erhöhten Steifigkeit beitragen. Über das Aufspreizen lässt sich auf effektive und zugleich reversible Art und Weise eine geometrische Versteifung der Verteilvorrichtung, insbesondere des Verteilgestänges, erreichen.

Eine konstruktiv besonders bevorzugte Ausführungsform sieht in diesem Zusammenhang vor, dass das mindestens eine Gestängeelement zweigeteilt ausgebildet ist, wobei dessen Teile über zwei einen Kniehebel bildende Versteifungselemente aufspreizbar ausgebildet sind. Ein derartiger Aufbau erlaubt eine zuverlässige Versteifung und erweist sich zugleich als wartungsfreundlich und störungsunanfällig.

Des Weiteren hat es sich als vorteilhaft erwiesen, wenn die Teile des Gestängeelements in einer aufgespreizten Stellung selbsthemmend aufgespreizt sind. Hierdurch lässt sich die Stabilität des Verteilgestänges in dessen ausgeklappter Arbeitsstellung weiter erhöhen. Insbesondere können die Teile des Gestängeelements durch die Selbsthemmung in der Arbeitsstellung des Verteilgestänges aufgrund des Gewichts des Verteilgestänges selbsthemmend arretiert sein.

In diesem Zusammenhang kann es konstruktiv besonders vorteilhaft sein, wenn die beiden Versteifungselemente in einer aufgespreizten Stellung der Teile in einer Übertotpunktlage des Kniehebels angeordnet sind. Die Übertotpunktlage kann auf einfache Art und Weise die Selbsthemmung und damit eine Arretierung oder Fixierung in der aufgespreizten Stellung ermöglichen.

Eine besonders bedienerfreundliche Ausgestaltung zeichnet sich dadurch aus, dass die Teile über mindestens einen Aktor, insbesondere einen hydraulischen Aktor, aufspreizbar ausgebildet sind. Hierdurch lässt sich auch der Grad der Aufspreizung, insbesondere ein Aufspreizwinkel, und damit auch der Grad der Versteifung des Verteilgestänges, einstellen.

Eine weitere konstruktiv bevorzugte Ausgestaltung sieht vor, dass die beiden Teile des Gestängeelements im Bereich deren einen Endes über eine Gelenkachse und im Bereich deren anderen Endes über den Kniehebel miteinander verbunden sind.

Des Weiteren hat es sich als vorteilhaft erwiesen, wenn die Versteifungsmittel Anbauelemente aufweisen. Bei diesen Anbauelementen kann es sich beispielsweise um Sensoren handeln, etwa zur Erfassung von Betriebszuständen der Verteilvorrichtung oder von Umgebungsbedingungen. Ferner kann es sich bei den Anbauelementen um Kameras handeln, beispielsweise zur Überwachung der Verteilorgane. Außerdem kann es sich bei den Anbauelementen um Beleuchtungselemente wie Leuchten zur Beleuchtung der Verteilvorrichtung oder deren Umgebung handeln. Des Weiteren kann es sich bei den Anbauelementen um beliebige andere Komponenten handeln, deren Anbringung an den Versteifungsmitteln sich im jeweiligen Anwendungsfall als vorteilhaft erweist.

Darüber hinaus ist denkbar, dass der dem einen oder den mehreren Versteifungsmitteln zugeordnete Aktor alternativ oder zusätzlich nach Art eines Dämpfers oder dergleichen ausgeführt und dazu eingerichtet ist, nach Art einer Überlastsicherung von außen in die Versteifungsmittel eingeleitete Kräfte, beispielsweise bei Kollision, zumindest teilweise aufzunehmen und/oder zu kompensieren.

Zur Lösung der vorstehend genannten Aufgabe wird ferner eine landwirtschaftliche Arbeitsmaschine mit einer Verteilvorrichtung vorgeschlagen, bei welcher die Verteilvorrichtung gemäß einem oder mehreren der vorstehend beschriebenen Merkmale ausgebildet ist. Es ergeben sich die im Zusammenhang mit der Verteilvorrichtung erläuterten Vorteile.

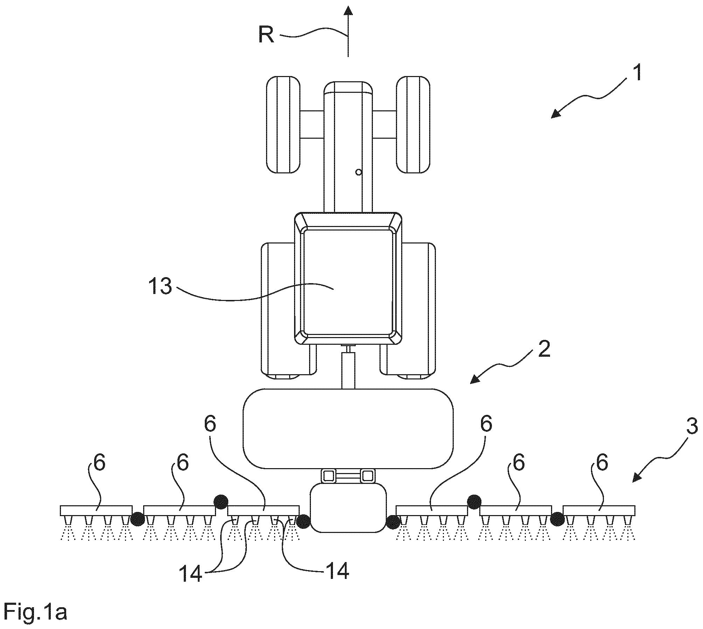

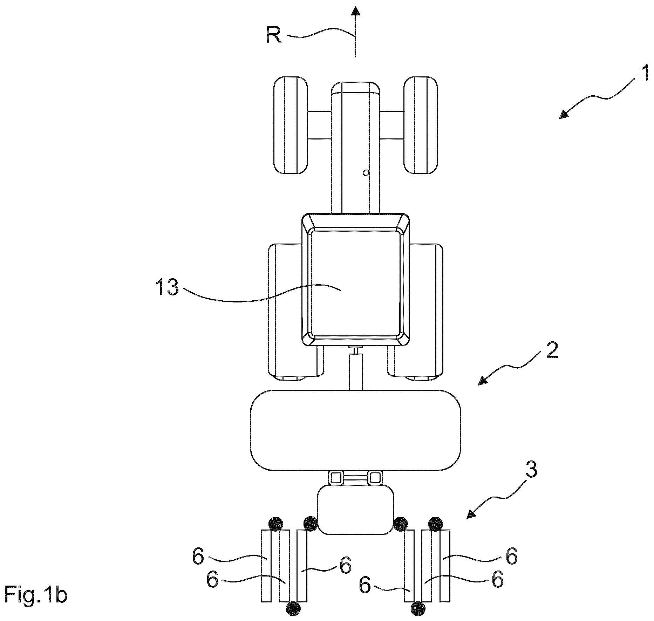

Weitere Einzelheiten und Vorteile der erfindungsgemäßen Verteilvorrichtung und der erfindungsgemäßen Arbeitsmaschine werden nachfolgend unter Zuhilfenahme der beigefügten Zeichnungen gemäß Fig. 1 bis 8b erläutert. Darin zeigen in jeweils schematisierter Ansicht:
- Fig. 1b: eine Draufsicht auf eine an eine Zugmaschine angehängte landwirtschaftliche Arbeitsmaschine mit einer Verteilvorrichtung, deren Verteilgestänge sich in der ausgeklappten Arbeitsstellung befindet;
- Fig. 1b: eine Draufsicht auf die Arbeitsmaschine gemäß der Darstellung in Fig. 1, wobei sich das Verteilgestänge in der eingeklappten Transportstellung befindet;
- Fig. 2 und 3: ausschnittsweise, vergrößerte Draufsichten auf unterschiedliche, sich in der ausgeklappten Arbeitsstellung befindliche Verteilgestänge mit Versteifungselementen;
- Fig. 4a: Detailansicht eines Verteilgestänges mit einem Versteifungselement in dessen Versteifungsstellung;
- Fig. 4b: Detailansicht des Verteilgestänges mit einem Versteifungselement gemäß Fig. 4a, wobei sich das Versteifungselement in dessen Transportstellung befindet;
- Fig. 5a: Detailansicht eines weiteren Verteilgestänges mit einem Versteifungselement in dessen Versteifungsstellung;
- Fig. 5b: Detailansicht des Verteilgestänges mit einem Versteifungselement gemäß Fig. 5a, wobei sich das Versteifungselement in dessen Transportstellung befindet;
- Fig. 6a bis c: verschiedene, schematisierte Ansichten einer Spreizvorrichtung, welche ein Gestängeelement aufspreizt;
- Fig. 7a bis c: weitere Ansichten der Spreizvorrichtung gemäß der Darstellungen in Fig. 6a bis c, wobei die Spreizvorrichtung jeweils einen Aktor aufweist und
- Fig. 8a und b: ausschnittsweise, schematische Seitenansichten eines weiteren, sich in der ausgeklappten Arbeitsstellung befindlichen Verteilgestänges mit Versteifungselementen.

Die Darstellungen gemäß Fig. 1a und b zeigen jeweils in Draufsicht eine landwirtschaftliche Arbeitsmaschine 1. Bei der Arbeitsmaschine 1 handelt es sich um eine Feldspritze zum Ausbringen von fluidförmigem Verteilgut, insbesondere von Spritzmittel, auf einer landwirtschaftlichen Nutzfläche. Es kann sich bei der Arbeitsmaschine 1 alternativ jedoch auch um eine anderes Gerät zum Ausbringen oder Verteilen von Verteilgut, insbesondere auch zum Ausbringen von körnigem oder granularem Verteilgut, handeln.

Die Arbeitsmaschine 1 ist an eine landwirtschaftliche Zugmaschine 13, gemäß der Darstellungen in Fig. 1a und b einen Traktor, angehängt. Die Zugmaschine 13 bewegt die Arbeitsmaschine 1 zum Ausbringen des Verteilguts in Fahrtrichtung R über die Nutzfläche. Alternativ kann die Arbeitsmaschine 1 jedoch auch selbstfahrend ausgebildet sein.

Zum Verteilen des Verteilguts weist die Arbeitsmaschine 1 eine Verteilvorrichtung 2 auf. Die Verteilvorrichtung 2 ermöglicht ein gleichmäßiges Verteilen des Verteilguts auf der Nutzfläche. Um das Verteilgut bei einer Überfahrt in Fahrtrichtung R über einen möglichst großflächigen Bereich der Nutzfläche verteilen zu können, weist die Verteilvorrichtung 2 ein Verteilgestänge 3 auf.

In der in Fig. 1a dargestellten ausgeklappten Arbeitsstellung des Verteilgestänges 3 erstreckt sich dieses quer zur Fahrtrichtung R flügelartig auf beiden Seiten des Arbeitsgeräts 1. Die Gesamtbreite oder Spannweite des Verteilgestänges in der Arbeitsstellung kann mehrere 10 Meter betragen. An dem Verteilgestänge 3 sind zahlreiche düsenartige Verteilorgane 12 angeordnet, über welche das flüssige Verteilgut auf die Nutzfläche ausgebracht wird. Die Verteilorgane 12 sind in der Arbeitsstellung des Verteilgestänges im Wesentlichen in Richtung der Nutzfläche ausgerichtet.

Da die Breite des Verteilgestänges 3 quer zur Fahrtrichtung R in dessen Arbeitsstellung die Breite der Zugmaschine und damit auch zulässige Maximalbreiten für Fahrten über öffentliche Straßen bei weitem übersteigt (vgl. Fig. 1a), ist das Verteilgestänge 3 zwischen der ausgeklappten Arbeitsstellung und einer eingeklappten Transportstellung gemäß Fig. 1b überführbar ausgebildet. In der Transportstellung weist das Verteilgestänge 3 eine erheblich reduzierte Breite bzw. Spannweite auf, sodass zulässige Transportmaße zuverlässig eingehalten werden können.

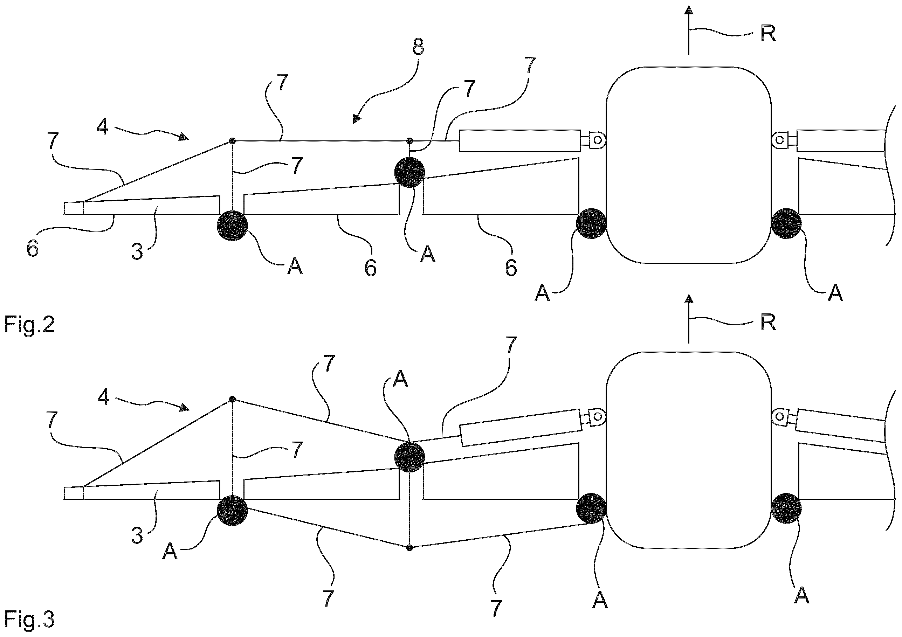

Wie dies auch den Darstellungen in Fig. 2 und 3 entnommen werden kann, ist das Verteilgestänge 3 segmentartig aufgebaut. Es umfasst mehrere Gestängeelemente 6, welche in der Arbeitsstellung quer zur Fahrtrichtung R in einer Reihe nebeneinander angeordnet sind. Die Gestängeelemente 6 weisen eine schlanke Form auf und erstrecken sich in der Arbeitsstellung mit ihrer Längsachse quer zur Fahrtrichtung R. Aufgrund unterschiedlichen Stabilitätserfordernissen je nach Position im Verteilgestänge 3 sind die Gestängeelemente 6, welche in der Arbeitsstellung weit auskragen, filigraner ausgestaltet als diejenigen Gestängeelemente 6, welche weniger weit auskragen und näher an der Mittelachse der Verteilvorrichtung 2 angeordnet sind, vgl. Fig. 2.

Zwischen den Gestängeelementen 6 sind jeweils Klappachsen A angeordnet, um welche die Gestängeelemente 6 gegeneinander verklappbar sind. Anhand der Darstellungen in Fig. 2 und 3 lässt sich erkennen, dass sich die Klappachsen A der Gestängeelemente 6 in im Wesentlichen vertikaler Richtung erstrecken. Aufgrund dieser Anordnung lassen sich die Gestängeelemente 6 von der Arbeitsstellung, in welcher die Gestängeelemente 6 im Wesentlichen quer zur Fahrtrichtung R ausgerichtet sind, in die Transportstellung überführen, in welcher die Gestängeelemente 6 sich mit ihrer Längsachse im Wesentlichen in Fahrtrichtung R erstrecken, vgl. Fig. 1b. In der Transportstellung sind die Gestängeelemente 6 gegeneinander verklappt.

Durch eine in Fahrtrichtung R abwechselnd versetzte Anordnung der Klappachsen A lassen sich die einzelnen Gestängeelemente 6 von der Arbeitsstellung in die Transportstellung zieharmonikaartig zusammenklappen. Alternativ können die Klappachsen A jedoch auch in andere Raumrichtungen ausgerichtet und/oder an anderen Positionen des Verteilgestänges 3 angeordnet sein, solange eine im Vergleich zur Arbeitsstellung weniger raumgreifende Transportstellung erreicht werden kann.

Die Verteilvorrichtung 2 weist Versteifungsmittel 4 zur Versteifung des Verteilgestänges 3 in dessen Arbeitsstellung auf, was nachfolgend zunächst anhand der Darstellung in Fig. 2 erläutert wird.

Bei den Versteifungsmitteln 4 handelt es sich um Mittel, welche eine Erhöhung der Steifigkeit des Verteilgestänges 3 in dessen Arbeitsstellung erlauben. Die Versteifungsmittel 4 dienen der Aufnahme von Kräften, welche auf das Verteilgestänge 3 in dessen Arbeitsstellung wirken. Sie können beispielsweise zu einer Reduktion von Schwingungen des Verteilgestänges 3 dienen.

Die Versteifungsmittel 4 bewirken eine Vergrößerung des wirksamen, lastaufnehmenden Querschnitts des Verteilgestänges 3 in dessen Arbeitsstellung, vgl. Fig. 2. Die Versteifungsmittel 4 können beispielsweise stabartige Versteifungselemente 7 umfassen, welche ein Versteifungsgestänge 8 bilden, vgl. Fig. 2 und 3. In der Arbeitsstellung des Verteilgestänges 3 kann das Versteifungsgestänge 8 etwa nach Art eines Fachwerks aufgespannt sein, vgl. Fig. 2 und 3. Gemäß den Darstellungen in Fig. 2 und 3 ermöglicht das Versteifungsgestänge 8 ein Erhöhung der Steifigkeit des Verteilgestänges 3 in einer im Wesentlichen horizontalen Ebene.

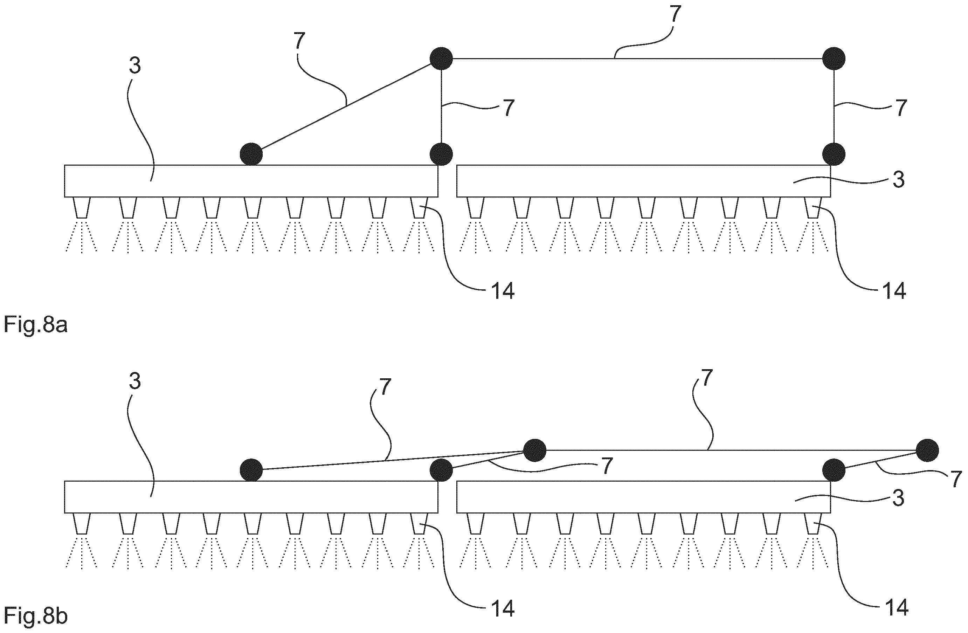

Das Versteifungsgestänge 8 kann in Fahrtrichtung R vor (vgl. Fig. 2), hinter oder beidseitig (vgl. Fig. 3) des Verteilgestänges 3 angeordnet sein. Alternativ kann das Versteifungsgestänge 8 auch oberhalb oder unterhalb des Verteilgestänges 3 angeordnet sein, wie dies in späteren Absätzen beispielsweise anhand von Fig. 8a beschrieben wird.

Ferner können entsprechend auch einzelne Versteifungselemente 7 oder Teile davon auf der einen Seite des Verteilgestänges 3 und andere Versteifungselemente 7 oder Teile davon auf der gegenüberliegenden Seite des Verteilgestänges 3 angeordnet sein, vgl. Fig. 3.

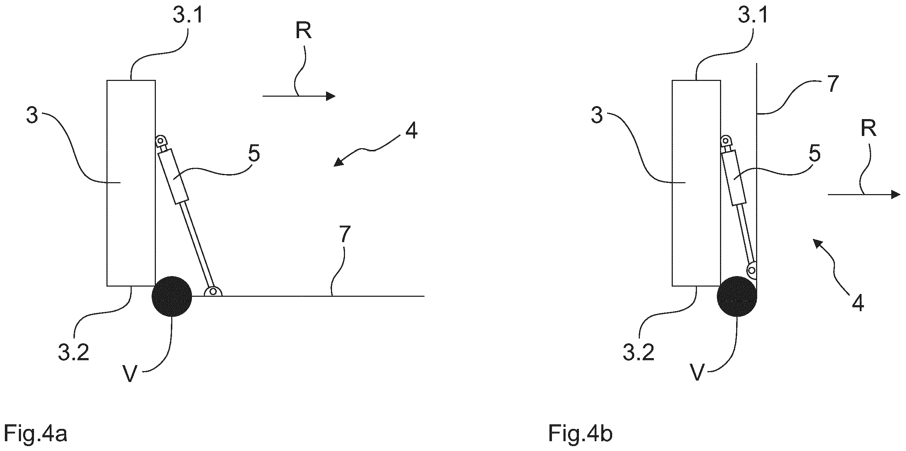

Die als Versteifungselemente 7 ausgebildeten Versteifungsmittel 4 sind derart ausgebildet, dass sie in der Transportstellung des Verteilgestänges 3 möglichst wenig Stauraum beanspruchen, da dieser für das transportgerechte Verstauen des Verteilgestänges 3 benötigt wird. Zu diesem Zweck sind die Versteifungsmittel 4 von einer Transportstellung in eine Versteifungsstellung überführbar, was nachfolgend anhand der Darstellungen in Fig. 4a und b erläutert wird.

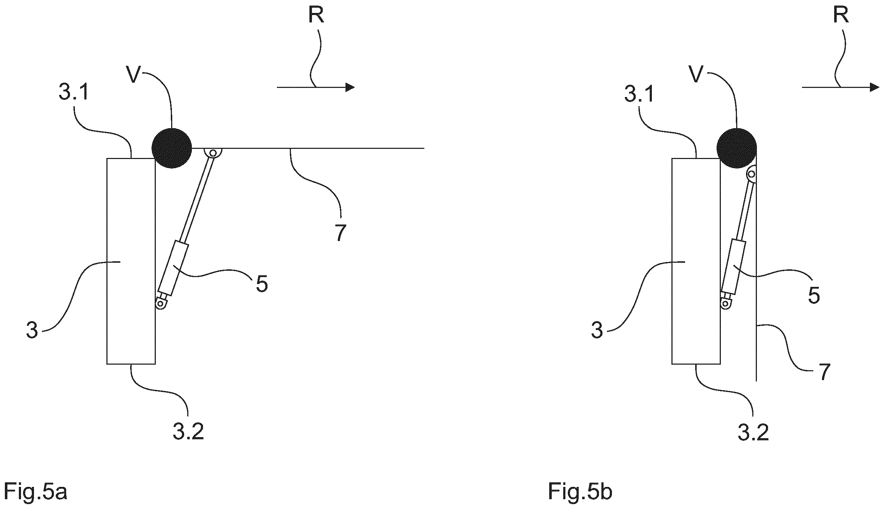

Die Darstellung in Fig. 5a zeigt ein Verteilgestänge 3 in einer Seitenansicht. An dem Verteilgestänge 3 ist exemplarisch ein Versteifungsmittel 4 in Form eines Versteifungselements 7 angeordnet. Das stab- oder balkenartig ausgebildeten Versteifungselement 7 erstreckt sich in einer Versteifungsstellung gemäß Fig. 4a im Wesentlichen in Fahrtrichtung R. In der Versteifungsstellung bewirkt das Versteifungselement 7 eine Versteifung des Verteilgestänges 3. Die Versteifung erfolgt dabei insbesondere geometrisch durch eine Vergrößerung des lastaufnehmenden Querschnitts des Verteilgestänges 3.

In einer Transportstellung gemäß Fig. 4b ist das Versteifungselement 7 näher an dem Verteilgestänge 3 angeordnet. Hierdurch lässt sich der erforderliche Platzbedarf des Verteilgestänges 3 in dessen eingeklappter Transportstellung reduzieren. In der Transportstellung erfolgt keine Versteifung des Verteilgestänges 3.

Das Versteifungselement 7 ist durch Klappen um die Verstellachse V von der Transportstellung in die Versteifungsstellung und umgekehrt überführbar. Die Verstellachse V erstreckt sich gemäß der Darstellung in Fig. 4a und b dabei in im Wesentlichen horizontaler Richtung. Alternativ kann sich die Verstellachse V jedoch auch in einer anderen Raumrichtung, insbesondere auch in im Wesentlichen senkrechter Richtung erstrecken.

Wie dies ebenfalls den Darstellungen in Fig. 4a und b entnommen werden kann, ist das Versteifungselement 7 über einen Aktor 5 von der Transportstellung in die Versteifungsstellung und von der Versteifungsstellung in die Transportstellung überführbar. Der Aktor 5, vorliegend ein Hydraulikzylinder, ist derart angeordnet, dass in einer ausgefahrenen, teleskopierten Stellung eine Versteifungsstellung eingestellt werden kann, vgl. Fig. 4a. Andererseits kann in einer eingefahrenen, nicht teleskopierten Stellung des Aktors 5 die Transportstellung des Versteifungselements 7 eingestellt werden. Der Aktor 5 bewirkt ein Klappen oder Verschwenken des Versteifungselements 7 um die Verstellachse V. Der Aktor 5 kann dabei je nach Anwendungsfall auch in umgekehrter Ausrichtung angeordnet sein.

Gemäß den Darstellungen in Fig. 4a und b ist die Verstellachse V im Bereich eines Untergurts 3.2 des Verteilgestänges 3 angeordnet. Alternativ kann die Verstellachse V jedoch auch im Bereich eines Obergurts 3.1 des Verteilgestänges 3 angeordnet sein, wie dies beispielhaft in Fig. 5a und b dargestellt ist. Die Funktionsweise des Aktors 5 entspricht dabei der vorstehend bereits erläuterten Funktionsweise - das Versteifungselement 7 ist von der Transportstellung (Fig. 5b) in die Versteifungsstellung (Fig. 5a) und umgekehrt überführbar.

Der als Hydraulikzylinder ausgeführte Aktor 5 kann mit dem Hydrauliksystem des Verteilgestänges 3, der Bordhydraulik der Arbeitsmaschine 1 oder der Bordhydraulik der Zugmaschine 13 gekoppelt sein. Ferner kann der Aktor 5 in die jeweilige Steuerung des Verteilgestänges 3, der Arbeitsmaschine 1 oder der Zugmaschine 13 eingebunden sein.

Alternativ zu einer Betätigung über einen oder mehrere Hydraulikzylinder kann der Klappvorgang des Versteifungselements 7 um die Verstellachse V auch manuell oder mit einem oder mehreren anderen Aktoren 5, etwa mechanischen, pneumatischen oder elektrischen Aktoren 5, durchgeführt werden.

Ferner können auch Zwischenstellungen zwischen der Versteifungsstellung gemäß Fig. 4a und 5a und der Transportstellung gemäß Fig. 4b und 5b einstellbar sein. Diese Zwischenstellungen können gewissermaßen ebenfalls Versteifungsstellungen bilden, die sich jedoch durch einen geringeren Versteifungsgrad auszeichnen. Die Zwischenstellungen können in einzelnen Stufen oder stufenlos einstellbar sein. Hierdurch kann sich eine bedarfsgerechte Versteifung des Verteilgestänges 3 erreichen lassen, welche beispielsweise an zu erwartende Lasten angepasst sein kann.

Wie dies ebenfalls den Darstellungen in Fig. 4a bis 5b entnommen werden kann, sind die Versteifungsmittel 4 in Form der Versteifungselemente 7 im Bereich der Verstellachsen V mit dem Verteilgestänge 3 verbunden. Hierdurch lässt sich das Versteifungsmittel 4 besonders einfach zwischen der Versteifungsstellung und der Transportstellung verstellen. Zugleich lässt sich das Verteilgestänge 3 einfach kompakt in die Transportstellung einklappen. Alternativ können die Versteifungsmittel 4 jedoch auch an anderen Stellen des Verteilgestänges 3 angebunden sein, wenn sich dies im jeweiligen Anwendungsfall als konstruktiv vorteilhaft erweist.

Ferner kann auch der Aktor 5 selbst als Versteifungsmittel 4 ausgebildet sein. Dieser kann beispielsweise durch Teleskopieren oder Ausfahren eines Stellzylinders von der Transport- in die Versteifungsstellung überführbar sein. Es ergibt sich ein weiter vereinfachter Aufbau mit reduzierter Teileanzahl.

Alternativ kann das Versteifungsmittel 4, beispielsweise ein Versteifungselement 7, auch selbst längenveränderlich, etwa teleskopierbar oder ausziehbar ausgebildet sein und auf dieses Weise zwischen einer Transportstellung und einer Versteifungsstellung verstellbar sein. Derartige längenveränderliche Versteifungsmittel 4 können an beliebigen Positionen des Verteilgestänges 3, beispielsweise an dessen Vorder-, Rück- oder Oberseite, angeordnet sein.

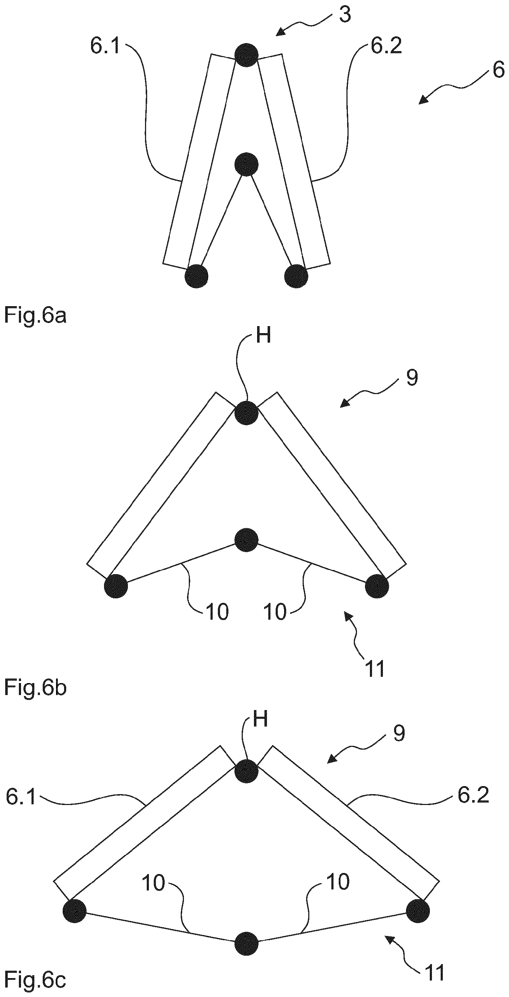

Im Folgenden wird anhand der Darstellungen in Fig. 6a bis c eine Ausführungsform erläutert, bei welcher Versteifungselemente 10 eine zwei Teile 6.1, 6.2 eines Gestängeelements 6 des Verteilgestänges 3 aufspreizende Spreizvorrichtung 9 bilden. Die Spreizvorrichtung 9 dient in diesem Fall als Versteifungsmittel 4.

Das Gestängeelement 6 des Verteilgestänges 3 ist zweigeteilt ausgebildet, vgl. Fig. 6a. Die beiden Teile 6.1, 6.2 sind im Bereich deren einen Endes über eine Gelenkachse H miteinander verbunden. Im Bereich deren anderen Endes ist ein Kniehebel 11 vorgesehen, welcher die beiden Teile 6.1, 6.2 miteinander verbindet. Der Kniehebel 11 umfasst zwei stab- oder stangenartig ausgebildete Versteifungselemente 10, welche über ein zentrales Gelenk gelenkig miteinander gekoppelt sind. Je nach Position der beiden Versteifungselemente 10, welche die Hebelelemente des Kniehebels 11 bilden, werden die beiden Teile 6.1, 6.2 unterschiedlich stark aufgespreizt, vgl. die Gegenüberstellung von Fig. 6a und 6b.

Die Darstellung gemäß Fig. 6a zeigt dabei eine mögliche Transportstellung des Gestängeelements 6 und damit des Verteilgestänges 3, in welcher sich auch das Versteifungsmittel 4, vorliegend als Spreizvorrichtung 9 ausgebildet, in der Transportstellung befindet. Die Transportstellung zeichnet sich dadurch aus, dass sie vergleichsweise wenig raumgreifend ist, so dass das Verteilgestänge 3 auf platzsparende Art und Weise eingeklappt werden kann, vgl. auch Fig. 1b.

Die Darstellung gemäß Fig. 6b verdeutlicht eine mögliche Arbeitsstellung des Gestängeelements 6 und damit des Verteilgestänges 3, in welcher sich auch das Versteifungsmittel 4, vorliegend als Spreizvorrichtung 9 ausgebildet, in der Versteifungsstellung befindet. Die Versteifungsstellung zeichnet sich dadurch aus, dass sie eine Versteifung des Verteilgestänges 3 in dessen Arbeitsstellung ermöglicht.

Die Position gemäß der Darstellung in Fig. 6c zeigt das Versteifungsmittel 4, d. h., die aufgespreizte Spreizvorrichtung 9, in einer besonderen, nämlich selbsthemmend verriegelten Versteifungsstellung. Fig. 6c zeigt eine Übertotpunktlage des Kniehebels. In dieser Position ist die Spreizvorrichtung 9 selbsthemmend aufgespreizt. Aufgrund der Selbsthemmung ist die Spreizvorrichtung 9 in der Position gemäß der Darstellung in Fig. 6c gewissermaßen verriegelt. So kann diese nicht ungewollt, beispielsweise aufgrund von Vibrationen oder Erschütterungen, aus der selbstgehemmten Position herausbewegt werden. In der Stellung gemäß der Darstellung in Fig. 6c sind die Teile 6.1, 6.2 des Gestängeelements 6 selbsthemmend aufgespreizt.

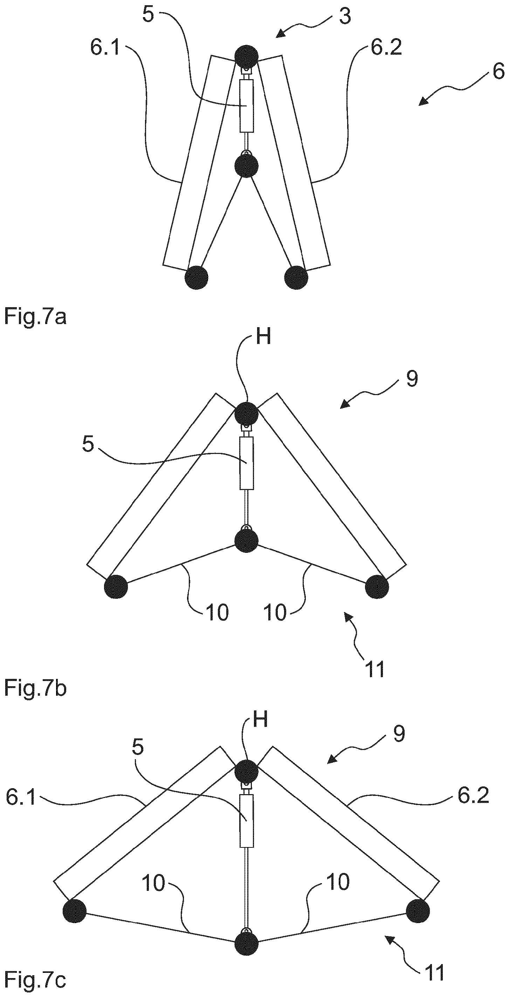

Die Darstellungen in den Fig. 7a bis c zeigen die Spreizvorrichtung 9 gemäß den Darstellungen in Fig. 6a bis c, jeweils ergänzt um einen Aktor 5. Der Aktor 5 ist zwischen der Gelenkachse H und dem Kniehebel 11 angeordnet. Über den Aktor 5 lassen sich die Teile 6.1, 6.2 des Gestängeelements 6 aufspreizen.

Abschließend wird anhand der Darstellungen in Fig. 8a und b eine Ausführungsform erläutert, bei welcher Versteifungsmittel 4 nicht in Fahrtrichtung R an der Vorder- oder Rückseite des Verteilgestänges 3, sondern an dessen Oberseite, den Verteilorganen 14 gegenüberliegend, angeordnet sind. Die Darstellungen in Fig. 8a und b entsprechen einer ausschnittsweisen Rückansicht des Verteilgestänges 3 in dessen ausgeklappter Arbeitsstellung.

Die Versteifungsmittel 4 bilden ein Versteifungsgestänge 8, welches mehrere gelenkig miteinander verbundene stab- oder balkenartige Versteifungselemente 7 umfasst. Die Versteifungselemente 7 sind mit den Gestängeelementen 6 des Verteilgestänges 3 jeweils im Bereich deren Obergurts 3.1 verbunden, vgl. Fig. 8a und b. In einer Versteifungsstellung, welche beispielhaft in Fig. 8a dargestellt ist, erstreckt sich das Versteifungsgestänge 8 in im Wesentlichen vertikaler Richtung nach oben. Über das Versteifungsgestänge 8, welches in der Versteifungsstellung eine Art Abspannung bildet, erfolgt eine Versteifung des Verteilgestänges 3 zur Erhöhung dessen mechanischer Stabilität in der Arbeitsstellung. Gemäß den Darstellungen in Fig. 8a und b ermöglicht das Versteifungsgestänge 8 eine Erhöhung der Steifigkeit des Verteilgestänges 3 in im Wesentlichen vertikaler Ebene.

In der Transportstellung des Versteifungsmittels 4, dargestellt in Fig. 8b, liegt das Versteifungsgestänge 8 im Wesentlichen flach und somit platzsparend auf dem Obergurt 3.1 des Verteilgestänges 3 auf. Die Klappbewegung zwischen der Versteifungsstellung und der Transportstellung des Versteifungsgestänges 8 kann manuell durch das Bedienpersonal oder mittels eines Aktors 5, insbesondere mittels eines hydraulischen Aktors, bewirkt werden. Das Klappen erfolgt durch Schwenkbewegungen um mehrere Verstellachsen V, welche sich im Ausführungsbeispiel gemäß der Darstellung in Fig. 8a im Wesentlichen in horizontaler Richtung erstrecken.

An den Versteifungsmitteln 4, etwa an den Versteifungselementen 7 und/oder den Versteifungsgestängen 8, aber auch an den Aktoren 5, können unterschiedliche, in den Figuren nicht dargestellte Arten von Anbauelementen angebaut sein. Hierbei kann es sich beispielsweise um Sensoren, Kameras, Beleuchtungselemente, Adapter, Sicherheitseinrichtungen usw. handeln, welche für den Betrieb der Verteilvorrichtung 2 verwendet werden oder eine darüber hinausgehende Zusatzfunktionalität bieten können.

Die vorstehend beschriebene Verteilvorrichtung 2 zum Verteilen von Verteilgut weist Mittel 4 zur Versteifung des Verteilgestänges 3 in dessen Arbeitsstellung auf. Die Versteifungsmittel 4 können die mechanische Stabilität des Verteilgestänges 3 während des Ausbringens des Verteilguts erhöhen. Zugleich kann eine kompakte, platzsparende Transportstellung des Verteilgestänges 3 sichergestellt werden.

### Bezugszeichen:

- 1: Arbeitsmaschine
- 2: Verteilvorrichtung
- 3: Verteilgestänge
- 3.1: Obergurt
- 3.2: Untergurt
- 4: Versteifungsmittel
- 5: Aktor
- 6: Gestängeelement
- 6.1: Teil
- 6.2: Teil
- 7: Versteifungselement
- 8: Versteifungsgestänge
- 9: Spreizvorrichtung
- 10: Versteifungselement
- 11: Kniehebel
- 12: Verteilorgan
- 13: Zugmaschine
- 14: Verteilorgane

- A: Klappachse
- H: Gelenkachse
- R: Fahrtrichtung
- V: Verstellachse

## Patentansprüche

1. Verteilvorrichtung zur Verteilung eines landwirtschaftlichen Verteilguts mit einem Verteilgestänge (3), welches von einer eingeklappten Transportstellung in eine ausgeklappte Arbeitsstellung überführbar ist **gekennzeichnet**
**durch** Mittel (4) zur Versteifung des Verteilgestänges (3) in dessen Arbeitsstellung.

2. Verteilvorrichtung nach Anspruch 1, **dadurch gekennzeichnet, dass** die Versteifungsmittel (4) von einer Transportstellung in eine Versteifungsstellung überführbar sind.

3. Verteilvorrichtung nach Anspruch 2, **dadurch gekennzeichnet, dass** die Versteifungsmittel (4) über mindestens einen Aktor (5), insbesondere einen hydraulischen Aktor, von der Transportstellung in die Versteifungsstellung überführbar sind.

4. Verteilvorrichtung nach einem der Ansprüche 2 oder 3, **dadurch gekennzeichnet, dass** die Versteifungsmittel (4) durch Klappen von der Transportstellung in die Versteifungsstellung überführbar sind.

5. Verteilvorrichtung nach Anspruch 4, **dadurch gekennzeichnet, dass** die Versteifungsmittel (4) durch Klappen um eine oder mehrere Verstellachsen (V) von der Transportstellung in die Versteifungsstellung überführbar sind.

6. Vorrichtung nach Anspruch 5, **dadurch gekennzeichnet, dass** die Verstellachsen (V) im Bereich eines Obergurts (3.1) und/oder eines Untergurts (3.2) des Verteilgestänges (3) angeordnet sind.

7. Verteilvorrichtung nach einem der vorhergehenden Ansprüche,
**dadurch gekennzeichnet, dass** das Verteilgestänge (3) mehrere um Klappachsen (A) gegeneinander verklappbare Gestängeelemente (6) aufweist.

8. Verteilvorrichtung nach einem der vorhergehenden Ansprüche,
**dadurch gekennzeichnet, dass** die Versteifungsmittel (4) mehrere ein Versteifungsgestänge (8) bildende Versteifungselemente (7) aufweisen.

9. Verteilvorrichtung nach einem der vorhergehenden Ansprüche,
**dadurch gekennzeichnet, dass** ein Teil der Versteifungselemente (7) auf der einen Seite und ein anderer Teil der Versteifungselemente (7) auf der gegenüberliegenden Seite des Verteilgestänges (3) angeordnet sind.

10. Verteilvorrichtung nach einem der vorhergehenden Ansprüche,
**dadurch gekennzeichnet, dass** die Versteifungsmittel (4) mehrere einen Versteifungskörper (9) aufspannende Versteifungselemente (10) aufweisen.

11. Verteilvorrichtung nach einem der Ansprüche 1 bis 10, **dadurch gekennzeichnet, dass** die Versteifungselemente (10) eine mindestens ein Gestängeelement (6) aufspreizende Spreizvorrichtung (9) bilden.

12. Verteilvorrichtung nach Anspruch 11, **dadurch gekennzeichnet, dass** das mindestens eine Gestängeelement (6) zweigeteilt ausgebildet ist, wobei dessen Teile (6.1, 6.2) über zwei einen Kniehebel (11) bildende Versteifungselemente (10) aufspreizbar ausgebildet sind.

13. Verteilvorrichtung nach einem der Ansprüche 11 oder 12, **dadurch gekennzeichnet, dass** die Teile (6.1, 6.2) des Gestängeelements (6) in einer aufgespreizten Stellung selbsthemmend aufgespreizt sind.

14. Verteilvorrichtung nach einem der Ansprüche 11 bis 13, **dadurch gekennzeichnet, dass** die beiden Teile (6.1, 6.2) des Gestängelements (6) im Bereich deren einen Endes über eine Gelenkachse (H) und im Bereich deren anderen Endes über den Kniehebel (11) miteinander verbunden sind.

15. Landwirtschaftliche Arbeitsmaschine, insbesondere Feldspritze, mit einer Verteilvorrichtung (2) nach einem der vorhergehenden Ansprüche.
